# EUROPEAN PATENT APPLICATION

(11) **EP 3 846 082 A1**
(43) Date of publication of application: **07.07.2021**
(21) Application number: 19220165.5
(22) Date of filing: 31.12.2019
(51) Int. Cl.: G06K 19/02, G06K 19/077

(54) **HEAT TRANSFER RFID TAG FOR FABRIC AND METHOD OF MANUFACTURING THE SAME**

(71) Applicant: BGT Materials Limited, Manchester M13 9PL (GB)
(72) Inventor: CHANG, KUO-HSIN, 622 CHIAYI COUNTY (TW); LAI, CHUNG-PING, 302 HSINCHU COUNTY (TW)
(74) Representative: Cabinet Chaillot

(57) **Abstract**

A heat transfer RFID tag for a fabric (60) contains: a substrate (10), a transfer pattern layer (20) printed on a face (11) of the substrate (10), an antenna (30) printed on the transfer pattern layer (20), a chip (40) electrically connected with the antenna, and a transfer glue layer (50) coated on a side of the face (11) of the substrate (10). The transfer glue layer (50) partially or completely covers the transfer pattern layer (20), the antenna (30), and the chip (40). A method of manufacturing the heat transfer RFID tag contains steps of: providing a substrate (10); transfer printing a transfer pattern layer (20) to the substrate (10); printing conductive paste to the transfer pattern layer (20) of the substrate (10); binding a chip (40) on the antenna (30); coating a transfer glue layer (50) on the substrate (10); melting the transfer glue layer (50) to the fabric (60) in a hot pressing manner; and separating the substrate (10) from the fabric (60).

## Description

### FIELD OF THE INVENTION

The present invention relates to a heat transfer Radio Frequency Identification (RFID) tag for a fabric and a method of manufacturing the same.

### BACKGROUND OF THE INVENTION

A conventional Radio Frequency Identification (RFID) tag is disclosed in CN105787553A and contains: a polyethylene terephthalate (PET) substrate, a metal antenna layer, and a chip. The PET substrate has a removable layer and a composite glue layer. The metal antenna layer is fixed on the composite glue layer, and the chip is bounded on the metal antenna layer by ways of the conductive paste. The metal antenna layer has a pressure sensitive adhesive layer or a hot-melt adhesive layer, wherein the pressure sensitive adhesive layer has a release paper.

A conventional method of manufacturing Radio Frequency Identification (RFID) tag is disclosed in CN105893890A, wherein the RFID tag is made of paper and contains a substrate made of paper, wherein the RFID tag further contains a print layer on which a bar code or LOGO patterns is printed, an electronic tag formed opposite to the print layer, a PET film connected with the electronic tag and an isolation layer coated on the PET film so as to produce the antenna, and a chip bounded on the antenna so as to form an inley layer, wherein a glue film is bounded on the chip, and the electronic tag is cut into a single or multiple parts.

However, the conventional RFID tags are complicated and produced at high fabrication cost.

The present invention has arisen to mitigate and/or obviate the afore-described disadvantages.

### SUMMARY OF THE INVENTION

The primary objective of the present invention is to provide a heat transfer RFID tag for a fabric and a method of manufacturing the same which are capable of overcoming the shortcomings of the conventional heat transfer RFID tag.

To obtain above-mentioned objective, a heat transfer RFID tag for a fabric provided by the present invention contains: a substrate; a transfer pattern layer printed on a face of the substrate; an antenna printed on the transfer pattern layer; a chip electrically connected with the antenna; and a transfer glue layer coated on a side of the face of the substrate, and the transfer glue layer partially or completely covers the transfer pattern layer, the antenna, and the chip.

A method of manufacturing the heat transfer RFID tag contains steps of:
providing a substrate;
transfer printing a transfer pattern layer to a face of the substrate;
printing conductive paste to the transfer pattern layer of the face of the substrate so as to produce an antenna on the transfer pattern layer;
binding a chip on the antenna;
coating a transfer glue layer on a side of the face of the substrate, wherein the transfer glue layer partially or completely covers the transfer pattern layer, the antenna, and the chip;
melting the transfer glue layer to a fabric in a hot pressing manner so as to adhere the transfer pattern layer, the antenna, and the chip with the fabric; and
separating the substrate from the fabric.

Preferably, the chip is bounded on the antenna by using anisotropic conductive paste/adhesive (ACP) or low-temperature anisotropic conductive paste/adhesive.

Preferably, the chip is bounded on the antenna by using anisotropic conductive paste/adhesive (ACP) in a flip-chip manner.

Preferably, the chip is packaged to produce two feet inserted into the fabric or the chip is fixed into the fabric by ways of at least one rivet or glue.

Preferably, the substrate includes a plastic film or a paper.

Preferably, the plastic film is made of polyethylene terephthalate (PET).

Preferably, conductive paste is printed to the transfer pattern layer of the face of the substrate so as to produce the antenna on the transfer pattern layer, the conductive paste of the antenna is any one of carbon conductive ink, metal conductive ink, polymer conductive ink, mixed conductive ink of the carbon conductive ink, the metal conductive ink, and the polymer conductive ink.

Preferably, the conductive paste is printed to the transfer pattern layer of the face of the substrate so as to produce the antenna on the transfer pattern layer in any one of a screen printing manner, an inkjet printing manner, and a spray printing manner.

Preferably, the transfer glue layer is melted to the fabric in the hot pressing manner within a temperature of 100 °C to 190 °C and within 3 sec to 25 sec.

Preferably, the transfer glue layer is coated on the side of the face of the substrate in a screen printing manner.

### BRIEF DESCRIPTION OF THE DRAWINGS

FIG. 1 is a cross sectional view showing the assembly of a heat transfer RFID tag for a fabric according to a preferred embodiment of the present invention.
FIG. 2 is a flow chart of a method of manufacturing the heat transfer RFID tag according to the preferred embodiment of the present invention.
FIG. 3 is a cross sectional view showing the steps of the method of manufacturing the heat transfer RFID tag according to the preferred embodiment of the present invention.

### DETAILED DESCRIPTION OF THE PREFERRED EMBODIMENTS

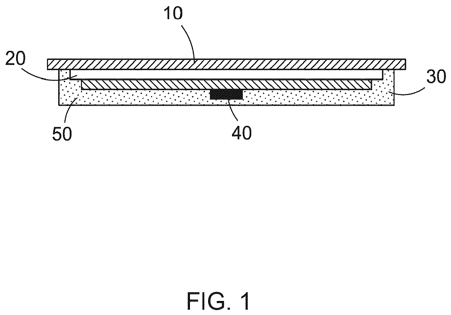

With reference to FIG. 1, a heat transfer RFID tag for a fabric according to a preferred embodiment of the present invention comprises: a substrate 10 and a transfer pattern layer 20 printed on a face 11 of the substrate 10.

The transfer pattern layer 20 includes texts or patterns and primer paint.

The heat transfer RFID tag further comprises an antenna 30, a chip 40, and a transfer glue layer 50, wherein the antenna 30 is printed on the transfer pattern layer 20 and is electrically connected with the chip 40, and the transfer glue layer 50 is coated on a side of the face 11 of the substrate 10, and the transfer glue layer 50 partially or completely covers the transfer pattern layer 20, the antenna 30, and the chip 40. Preferably, the transfer glue layer 50 is melted to the fabric 60 in a hot pressing manner so as to adhere the transfer pattern layer 20, the antenna 30, and the chip 40 on the fabric 60.

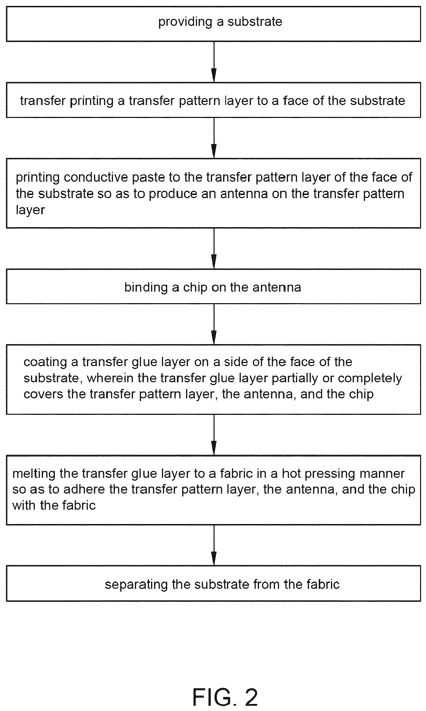

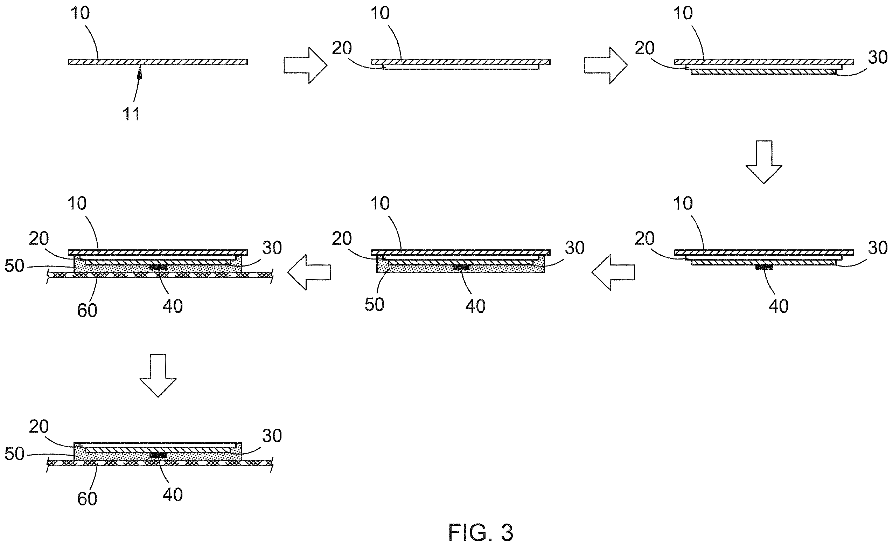

Referring to FIGS. 2 and 3, a method of manufacturing the heat transfer RFID tag comprises steps of:
providing the substrate 10, wherein the substrate 10 includes a plastic film or a paper, and the plastic film is made of polyethylene terephthalate (PET);
transfer printing the transfer pattern layer 20 to the face 11 of the substrate 10;
printing conductive paste to the transfer pattern layer 20 of the face 11 of the substrate 10 so as to produce the antenna 30 on the transfer pattern layer 20;
binding the chip 40 on the antenna 30;
coating the transfer glue layer 50 on the side of the face 11 of the substrate 10, wherein the transfer glue layer 50 partially or completely covers the transfer pattern layer 20, the antenna 30, the chip 40 so as to produce the heat transfer RFID tag (as shown in FIG. 3);
melting the transfer glue layer 50 to the fabric 60 in the hot pressing manner so as to adhere the transfer pattern layer 20, the antenna 30, and the chip 40 with the fabric 60; and
separating the substrate 10 from the fabric 60.

The chip 40 is bounded on the antenna 30 by using anisotropic conductive paste/adhesive (ACP) or low-temperature anisotropic conductive paste/adhesive. In this emdboimdnet, the chip 40 is bounded on the antenna 30 by using the ACP, wherein a solidifying temperature of the ACP is within 125 °C to 185°C, a hot pressing time is 5 sec to 12 sec, wherein a pressure is 0.06 Mpa to 0.09 Mpa.

When the RFID tag is manufactured in a flip-chip manner, the anisotropic conductive paste/adhesive is applied to package electronic components, wherein the anisotropic conductive paste/adhesive is conductive in a single direction (such as in a vertical direction instead of a parallel direction) and is adhesive. In another embodiment, the chip 40 is bounded to the antenna 30 by using low temperature binding glue.

Alternatively, the chip 40 is packaged to produce two feet inserted into the fabric 60. In another embodiment, the chip 40 is fixed into the fabric 60 by ways of at least one rivet or glue.

The conductive paste of the antenna 30 is any one of carbon conductive ink, metal conductive ink, polymer conductive ink, mixed conductive ink of the carbon conductive ink, the metal conductive ink, and the polymer conductive ink. The conductive paste is printed to the transfer pattern layer 20 of the face 11 of the substrate 10 so as to produce the antenna 30 on the transfer pattern layer 20 in any one of a screen printing manner, an inkjet printing manner, and a spray printing manner.

The transfer glue layer 50 is melted to the fabric 60 in the hot pressing manner within a temperature of 100 °C to 190 °C and within 3 sec to 25 sec. In another embodiment, the transfer glue layer 50 is coated on the side of the face 11 of the substrate 10 in a screen printing manner.

Accordingly, the heat transfer FRID tag is printed to the fabric efficiently. While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A heat transfer RFID tag for a fabric (60) comprising:
a substrate (10);
a transfer pattern layer (20) printed on a face (11) of the substrate (10);
an antenna (30) printed on the transfer pattern layer (20);
a chip (40) electrically connected with the antenna (30); and
a transfer glue layer (50) coated on a side of the face (11) of the substrate (10), and the transfer glue layer (50) partially or completely covers the transfer pattern layer (20), the antenna (30), and the chip (40).

2. The heat transfer RFID tag as claimed in claim 1, **characterized in that** the chip (40) is bounded on the antenna (30) by using anisotropic conductive paste/adhesive (ACP) or low-temperature anisotropic conductive paste/adhesive.

3. The heat transfer RFID tag as claimed in claim 1, **characterized in that** the chip (40) is bounded on the antenna (30) by using anisotropic conductive paste/adhesive (ACP) in a flip-chip manner.

4. The heat transfer RFID tag as claimed in claim 1, **characterized in that** the chip (40) is packaged to produce two feet inserted into the fabric (60) or the chip (40) is fixed into the fabric (60) by ways of at least one rivet or glue.

5. The heat transfer RFID tag as claimed in claim 1, wherein the substrate (10) includes a plastic film or a paper.

6. The heat transfer RFID tag as claimed in claim 5, **characterized in that** the plastic film is made of polyethylene terephthalate (PET).

7. The heat transfer RFID tag as claimed in claim 1, **characterized in that** conductive paste is printed to the transfer pattern layer (20) of the face (11) of the substrate (10) so as to produce the antenna (30) on the transfer pattern layer (20), the conductive paste of the antenna (30) is any one of carbon conductive ink, metal conductive ink, polymer conductive ink, mixed conductive ink of the carbon conductive ink, the metal conductive ink, and the polymer conductive ink.

8. A method of manufacturing the heat transfer RFID tag comprising steps of:
providing a substrate (10);
transfer printing a transfer pattern layer (20) to a face (11) of the substrate (10);
printing conductive paste to the transfer pattern layer (20) of the face (11) of the substrate (10) so as to produce an antenna (30) on the transfer pattern layer (20);
binding a chip (40) on the antenna (30);
coating a transfer glue layer (50) on a side of the face (11) of the substrate (10), wherein the transfer glue layer (50) partially or completely covers the transfer pattern layer (20), the antenna (30), the chip (40);
melting the transfer glue layer (50) to a fabric (60) in a hot pressing manner so as to adhere the transfer pattern layer (20), the antenna (30), and the chip (40) with the fabric (60); and
separating the substrate (10) from the fabric (60).

9. The method of manufacturing the heat transfer RFID tag as claimed in claim 8, **characterized in that** the chip (40) is bounded on the antenna (30) by using anisotropic conductive paste/adhesive (ACP) or low-temperature anisotropic conductive paste/adhesive.

10. The method of manufacturing the heat transfer RFID tag as claimed in claim 8, **characterized in that** the chip (40) is bounded on the antenna (30) by using anisotropic conductive paste/adhesive (ACP) in a flip-chip manner.

11. The method of manufacturing the heat transfer RFID tag as claimed in claim 8, **characterized in that** the chip (40) is packaged to produce two feet inserted into the fabric (60) or the chip (40) is fixed into the fabric (60) by ways of at least one rivet or glue.

12. The method of manufacturing the heat transfer RFID tag as claimed in claim 8, **characterized in that** the substrate (10) includes a plastic film or a paper.

13. The method of manufacturing the heat transfer RFID tag as claimed in claim 12, **characterized in that** the plastic film is made of polyethylene terephthalate (PET).

14. The method of manufacturing the heat transfer RFID tag as claimed in claim 8, **characterized in that** conductive paste is printed to the transfer pattern layer (20) of the face (11) of the substrate (10) so as to produce the antenna (30) on the transfer pattern layer (20), the conductive paste of the antenna (30) is any one of carbon conductive ink, metal conductive ink, polymer conductive ink, mixed conductive ink of the carbon conductive ink, the metal conductive ink, and the polymer conductive ink.

15. The method of manufacturing the heat transfer RFID tag as claimed in claim 8, **characterized in that** the transfer glue layer (50) is melted to the fabric (60) in the hot pressing manner within a temperature of 100 °C to 190 °C and within 3 sec to 25 sec.
